# EUROPEAN PATENT SPECIFICATION

(11) **EP 2 418 256 B1**
(45) Date of publication and mention of the grant of the patent: **27.03.2013**
(21) Application number: 10007893.0
(22) Date of filing: 29.07.2010
(51) Int. Cl.: C09B 35/031, C09B 35/18, C09B 35/28, C09B 35/30, C09B 35/32, D06P 1/39, D06P 3/16, D06P 3/24

(54) **Acid dyes**
Saure Farbstoffe
Colorants acides

(43) Date of publication of application: 15.02.2012
(73) Proprietor: Clariant Finance (BV) Limited, Road Town, Tortola (VG)
(72) Inventor: Nusser, Rainer, Dr., 79395 Neuenburg (DE)
(74) Representative: Clariant Produkte (Deutschland) GmbH

(56) References cited:
- DE-A1- 3 035 307
- GB-A- 1 419 208

## Description

The invention relates to novel acid dyes, a process for their preparation and their use for dyeing organic substrates.

Acid dyes are known and dyes with bridging members are known as well. Surprisingly, it was found that certain acid dyes can be used for dyeing textile fibres in aqueous media. These polyamide fibres may be man made polyamide fibres (all nylon types) or natural polyamide fibres as for example wool or silk.

DE 3035307 A1 discloses disases dyes suitable for dyening printing of polyamide textiles.

According to the invention there are provided compounds of formula (I) 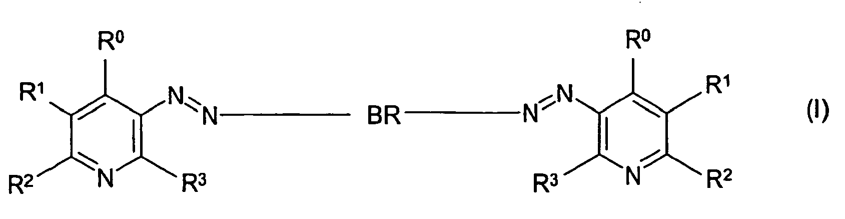 R⁰ signifies a C₁ to C₄ alkyl group, preferably methyl,
R¹ signifies CN or CONH₂,
R² and R³ are -NR⁴R⁵, wherein NR⁴R⁵ together form a five six-membered heterocyclicring, the heteroatoms being N, O and/or S;
BR is a bridge of the formula -A-B-A- wherein
A is substituted phenyl or substituted naphthyl or unsubstituted phenyl or unsubstituted naphthyl, and
B is a bivalent group of the formula -SO₂-, -CONH-, -HNCO-, -SO₂NH- or -HNSO₂-,
with the proviso that the compounds of formula (I) bear at least one anionic substituent, preferably 1 or 2 or 3 anionic substituents, of which 2 anionic substituents are particularly preferred; or

R⁰ signifies methyl,
R¹ signifies CN or CONH₂,
R² or R³ signifies -NR⁴R⁵, wherein
R⁴ is hydrogen, and
R⁵ is C₁-C₄-alkylene-X, wherein X is phenyl or phenyl substituted with one sulfo group, and
R³ or R² signifies -NR⁴R⁵, wherein
R⁴ is hydrogen or methyl, and
R⁵ is C₁-C₄-alkylene-X, wherein X is hydroxyl, hydroxyl-C₁-C₄-alkoxy or wherein NR⁴R⁵together form a five- or six-membered heterocyclic ring, the heteroatoms being N, O and /or S, for example morpholinyl, piperidinyl and piperazinyl;
and
BR is a bridge of the formula -A-B-A- wherein
A is unsubstituted phenyl or phenyl substituted with a sulfo group, and
B is a bivalent group of the formula -SO₂-, -CONH-, -HNCO-, -SO₂NH- or -HNSO₂-,
with the proviso that the compounds of formula (I) bear one or two sulfo groups.

The at least one anionic substituent in the compounds of formula (I) are located in the substituents R² , R³ and/or A.

Preferred anionic substituents are carboxyl and/or sulfo groups, and sulfo groups are particularly preferred.

In the compounds of formula (I), the amino groups corresponding to R² and R³ can be identical or different.

Phenyl and naphthyl as specified in A and R⁵ are optionally substituted with sulfo, carboxy, C₁-C₄-alkyl, C₁-C₄-alkoxy, nitro, hydroxyl, preferably with sulfo.

The alkyl, alkylene and alkoxy groups can be linear or branched.

Preferred groups A are unsubstituted phenyl or phenyl substituted with sulfo, preferably one sulfo group in each A of -A-B-A-.

In particularly preferred compounds of formula (I)
- R⁰: signifies methyl,
- R¹: signifies CN,
- R² or R³: signifies -NR⁴R⁵, wherein
- R⁴: is hydrogen, and
- R⁵: is C₂-C₃-alkylene-X, wherein X is sulfophenyl,
and
- R³ or R²: signifies -NR⁴R⁵, wherein

- R⁴: is hydrogen, and
- R⁵: is C₂-C₃-alkylene-X, wherein X is hydroxyl,

and
BR is a bridge of the formula -A-B-A- wherein
A is unsubstituted phenyl, and
B is a bivalent group of the formula -SO₂-.

The invention also provides for a mixture of compounds of formula (I).

The invention also provides a process for preparing compounds of the formula (I).

In this process, both amine functions of compounds of the formula (II)

H₂N - BR - NH₂ (II),

which are known from the literature are conventionally diazotized and coupled onto totally two equivalents of compounds of the formula (IIIa) and (IIIb) 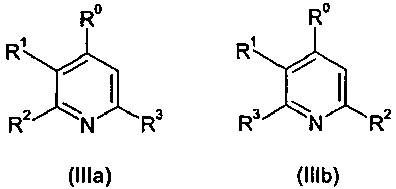 where the substituents are each as defined above. The coupling components of formula (IIIa) and (IIIb) can be prepared as described in DE-A-23 06 673.

In these processes, the particular diamine of formula (II) is cooled to 0 - 10 °C or preferably to 0 - 5 °C and diazotized by adding nitrosylsulphuric acid or sodium nitrite. Afterwards, the bis-diazotized diamine is allowed to react with the compounds (IIIa) and (IIIb) preferably in aqueous solution, at a temperature of between 0 and 30 °C.

The dyes of the formula (I) can be isolated from the reaction medium by conventional processes, for example by salting out with an alkali metal salt, filtering and drying, if appropriate under reduced pressure and at elevated temperature.

Depending on the reaction and/or isolation conditions, the dyes of the formula (I) can be obtained as free acid, as salt or as mixed salt which contains for example one or more cations selected from alkali metal ions, for example the sodium ion, or an ammonium ion or alkylammonium cation, for example mono-, di- or trimethyl- or -ethylammonium cations. The dye can be converted by conventional techniques from the free acid into a salt or into a mixed salt or vice versa or from one salt form into another. If desired, the dyes can be further purified by diafiltration, in which case unwanted salts and synthesis by-products are separated from the crude anionic dye.

The removal of unwanted salts and synthesis by-products and partial removal of water from the crude dye solution can be carried out by means of a semipermeable membrane by applying a pressure whereby the dye is obtained without the unwanted salts and synthesis by-products as a solution and if necessary as a solid body in a conventional manner.

The invention accordingly provides in another aspect for the use of the dyes of the formula (I), their salts and mixtures for dyeing and/or printing fibrous materials consisting of natural or synthetic polyamides. A further aspect is the production of Inkjet printing inks and their use for printing fibrous materials consisting of natural or synthetic polyamides.

Dyeing in aqueous media or from an aqueous media is carried out as per known processes, see for example the dyeing processes described in Ullmanns Encyklopädie der technischen Chemie, 4th Edition, 1982, Volume 22, pages 658-673 or in the book by M. Peter and H.K. Rouette, Grundlagen der Textilveredlung, 13th Edition, 1989, pages 535-556 and 566-574. Preference is given to dyeing in the exhaust process at a temperature of 30 to 140 °C, more preferably 80 to 120 °C and most preferably at a temperature of 80 to 100 °C, and at a liquor ratio in the range from 3:1 to 40:1.

Therefore the present invention provides also a process for dyeing or printing fibrous material consisting of natural or synthetic polyamides in aqueous media comprising the steps of providing a substrate consisting of natural or synthetic polyamides, providing a compound or compounds of formula (I), their salt or mixture thereof, and dyeing or printing or ink jet printing said substrate with said compound or compounds, their salt or mixture thereof.

The substrate to be dyed can be present in the form of yarn, woven fabric, loop-formingly knitted fabric or carpet for example. Fully fashioned dyeings are even permanently possible on delicate substrates, examples being lambswool, cashmere, alpaca and mohair. The dyes of the invention are particularly useful for dyeing fine-denier fibres (microfibres).

The dyes according to the present invention and their salts are highly compatible with known acid dyes. Accordingly, the dyes of the formula (I), their salts or mixtures can be used alone in a dyeing or printing process or else as a component in a combination shade dyeing or printing composition together with other acid dyes of the same class, i.e. with acid dyes possessing comparable dyeing properties, such as for example fastness properties and exhaustion rates from the dyebath onto the substrate. The dyes of the present invention can be used in particular together with certain other dyes having suitable chromophores. The ratio in which the dyes are present in a combination shade dyeing or printing composition is dictated by the hue to be obtained.

The dyes of the formula (I), as stated above, are very useful for dyeing natural and synthetic polyamides, i.e. wool, silk and all nylon types, from an aqueous media on each of which dyeings having a high fastness level, especially good light fastness and good wet fastnesses (washing, alkaline perspiration) are obtained. The dyes of the formula (I) and their salts have a high rate of exhaustion. The ability of the dyes of the formula (I) and their salt to build up is likewise very good. On-tone dyeings on the identified substrates are of outstanding quality. All dyeings moreover have a constant hue under artificial light. Furthermore, the fastness to decating and boiling is good.

One decisive advantage of the dyes of the formula (I) is that they are metal free and provide very level dyeings.

The compounds according to the invention can be used as an individual dye or else, owing to their good compatibility, as a combination element with other dyes of the same class having comparable dyeing properties, for example with regard to general fastnesses and exhaustion value. The combination shade dyeings obtained have similar fastnesses to dyeings with the individual dye.

The invention's dyes of the formula (I) can also be used as yellow components in trichromatic dyeing or printing. Trichromatic dyeing or printing can utilize all customary and known dyeing and printing processes, such as for example the continuous process, exhaustion process, foam dyeing process and Ink-Jet process.

The composition of the individual dye components in the trichromatic dye mixture used in the process of the invention depends on the desired hue. A brown hue for example preferably utilizes 20 - 40 % by weight of the invention's yellow component, 40 - 60 % by weight of an orange or red component and 10 - 20 % by weight of a blue component.

The yellow component, as described above, can consist of a single component or of a mixture of different yellow individual components conforming to the formula (I). Preference is given to double and triple combinations.

Particularly preferred red and/or blue components are described in WO2002/46318 or WO99/51681 respectively.

In the examples which follow, parts and percentages are by weight and temperatures are reported in degrees Celsius.

### Preparation Example 1:

40.8 Parts (0,1 mol) of 3,3'-Disulpho-4,4'-diamino-diphenylsulphon are tetrazotised with 13.8 parts (0,2 mol) of sodium nitrite at 0-5°C in 200 parts of water and 60 parts of hydrochloric acid (ca. 30%) and added to a solution of 47.2 parts (0.2 mol) of compound 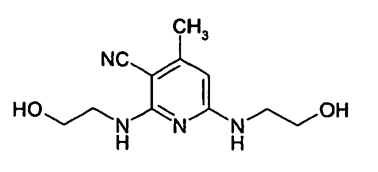 dissolved in 300 parts of water. By the addition of 30% NaOH solution the pH is brought to 8 - 8.5. After coupling had ended, the resulting dye of the formula 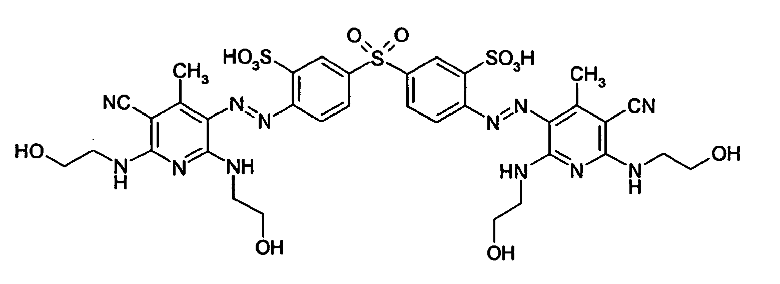 was salted out with sodium chloride, filtered off and dried at 50 °C under reduced pressure. On wool and in particular on polyamide fibres it produces yellow dyeings having very good light and wet fastness properties (lambda(max) (λₘₐₓ) = 455 nm).

### Preparation Example 2:

24.8 Parts (0,1 mol) of 4,4'-Diamino-diphenylsulphon are tetrazotised with 13.8 parts (0,2 mol) of sodium nitrite at 0-5°C in 200 parts of water and 60 parts of hydrochloric acid (ca. 30%) and added to a solution of 75.2 parts (0.2 mol) of a mixture of compounds (1 a) and (1 b) 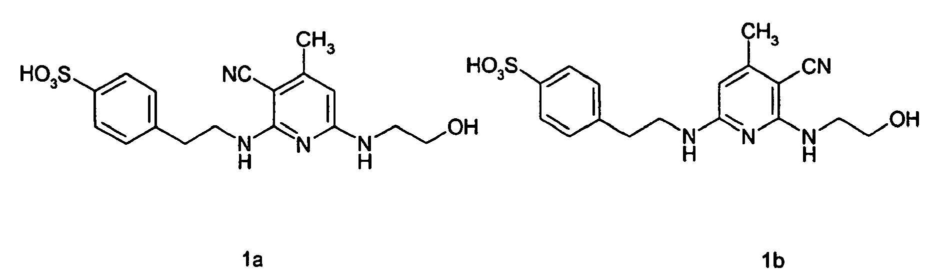 dissolved in 250 parts of water. By the addition of 30 % NaOH solution the pH is brought to 8 - 8.5 yielding a dyestuff mixture of formula 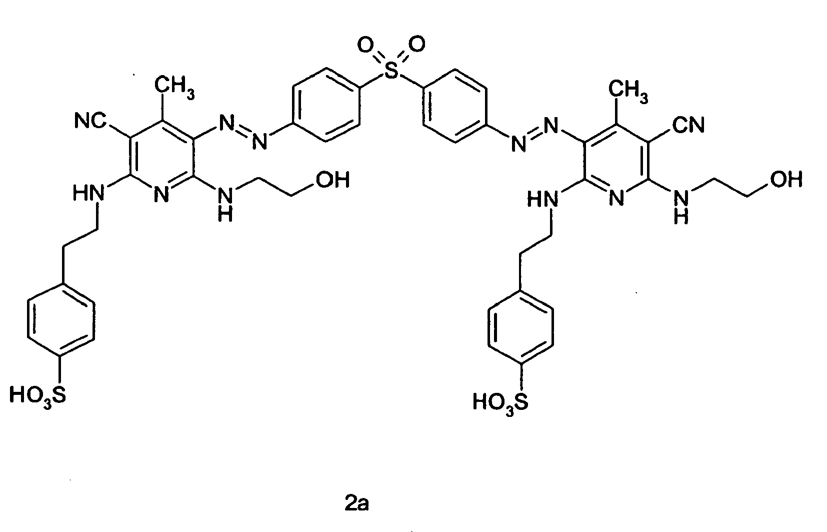 and 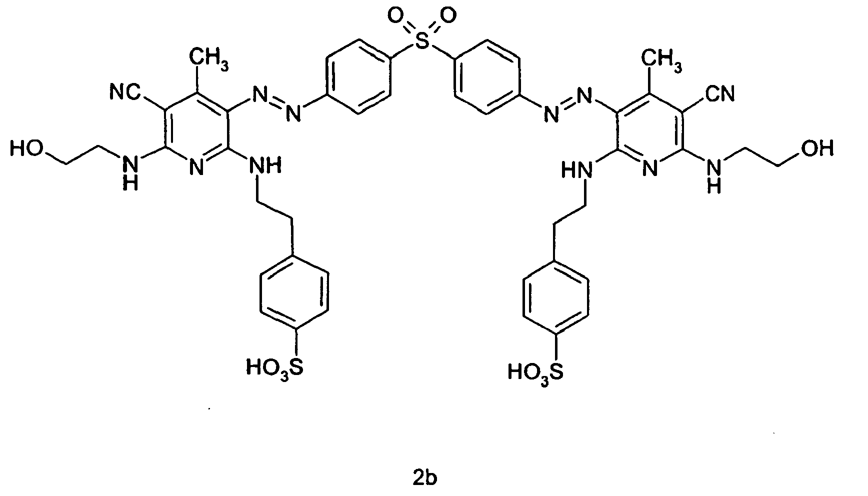 and

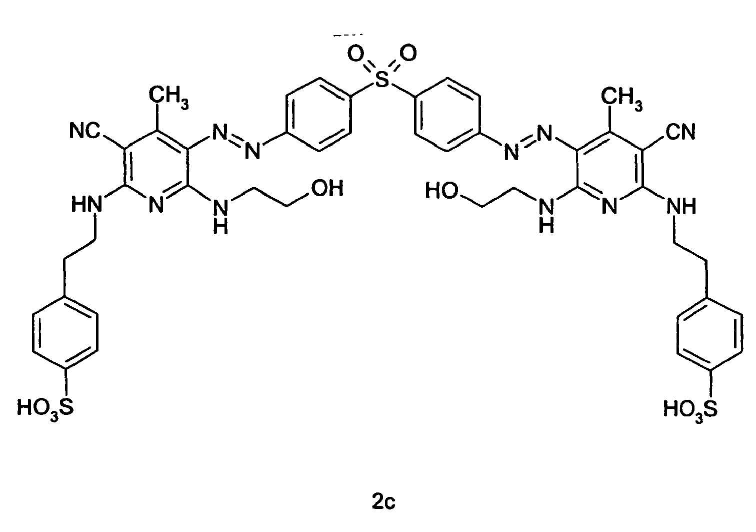

The dyestuff can be isolated by salting out with sodium chloride, filtered off and dried at 50 °C under reduced pressure or the reaction mixture however can be used directly for dyeing without isolation the product. On wool and in particular on polyamide fibres it produces yellow dyeings having very good light and wet fastness properties (lamda(max) (λₘₐₓ) = 467 nm).

### Examples 3-40

The table which follows contains dyes which can be prepared similarly to the method described in Example 1 or 2 by using the corresponding starting materials. These dyes provide yellow dyeings having very good light and wet fastnesses on polyamide fibres and wool. In the far-right column of the following table lambda (max) (λₘₐₓ) of the relevant substance is given. If R² and R³ differ from each other the reaction leads not to a single compound, but to a mixture of corresponding isomers (like in example 2 described).

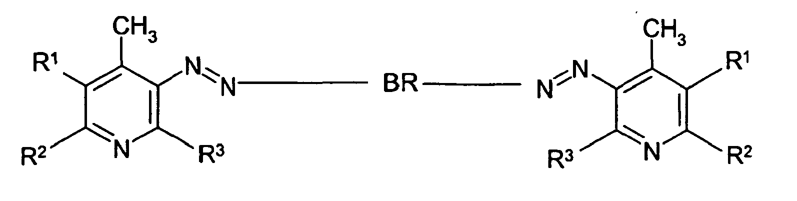

The asterisks indicate the binding site.

| Example | R¹ | R² | R³ | BR | λₘₐₓ [nm] |
|---|---|---|---|---|---|
| 3 | H₂NOC- | 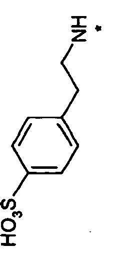 | 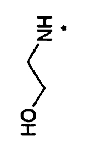 | 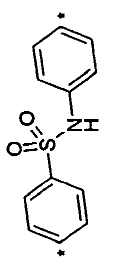 | 442 |
| 4 | -CN | 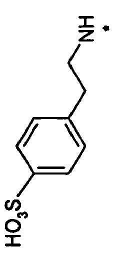 | dto. | 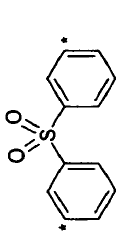 | 451 |
| 5 | dto. | 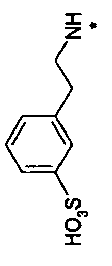 | 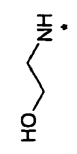 | 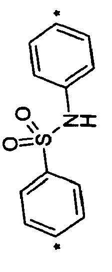 | 444 |
| 6 | dto. | dto. | dto. | 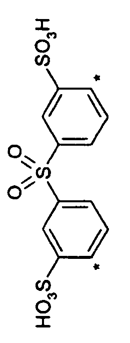 | 453 |
| 7 | H₂NOC- | 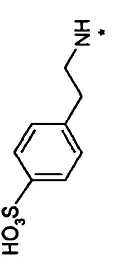 | dto. | 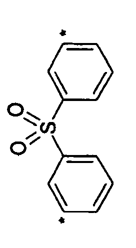 | 448 |
| 8 | -CN | dto. | 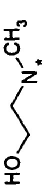 | dto. | 453 |
| 9 | dto. | dto. | dto. | 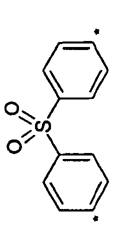 | 464 |
| 10 | dto. | dto. | dto. | 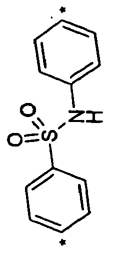 | 449 |
| 11 | dto. | dto. | dto. | 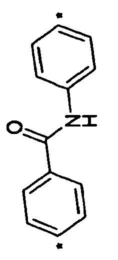 | 452 |
| 12 | dto. | 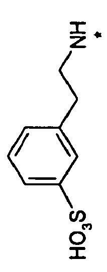 | 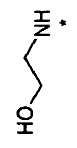 | 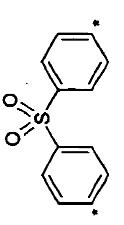 | 466 |
| 13 | dto. | dto. | dto. | 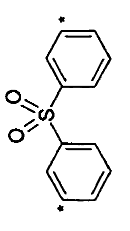 | 450 |
| 14 | dto. | 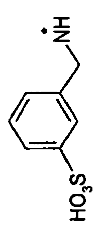 | dto. | dto. | 451 |
| 15 | dto. | dto. | dto. | 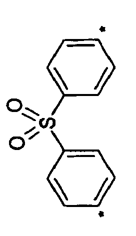 | 468 |
| 16 | dto. | 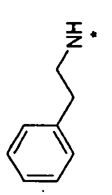 | dto. | 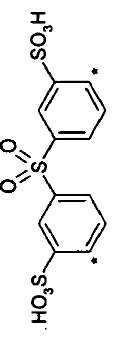 | 455 |
| 17 | H₂NOC- | dto. | dto. | dto. | 450 |
| 18 | dto. | dto. | 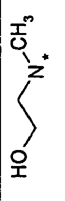 | dto. | 452 |
| 19 | -CN | 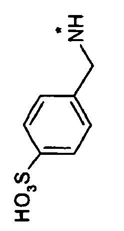 | 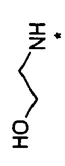 | 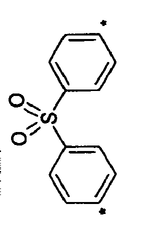 | 468 |
| 20 | dto. | 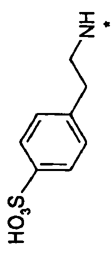 | 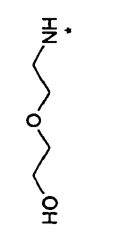 | dto. | 465 |
| 21 | dto. | dto. | 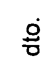 | dto. | 467 |
| 23 | dto. | 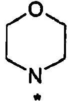 | 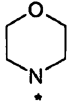 | dto. | 458 |
| 25 | dto. | 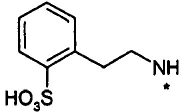 | 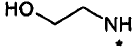 | 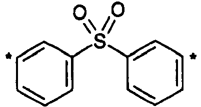 | 453 |
| 26 | dto. | dto. | dto. | 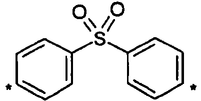 | 466 |
| 27 | H₂NOC- | 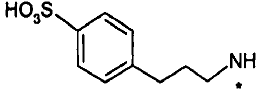 | 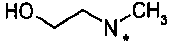 | dto. | 460 |
| 28 | -CN | dto. | 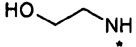 | dto. | 463 |
| 29 | dto. | dto. | dto. | 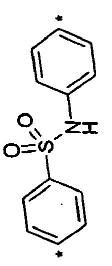 | 445 |
| 30 | H₂NOC- | 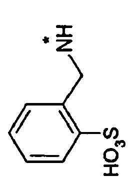 | 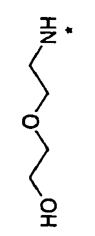 | dto. | 442 |
| 31 | dto. | dto. | dto. | 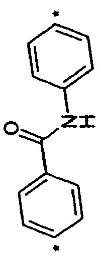 | 443 |
| 32 | -CN | 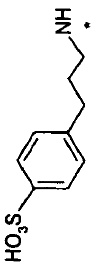 | 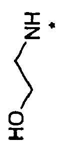 | dto. | 448 |
| 33 | dto. | 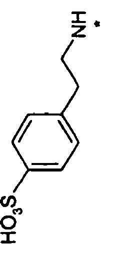 | 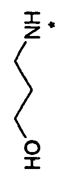 | 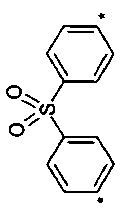 | 466 |
| 34 | dto. | dto. | dto. | 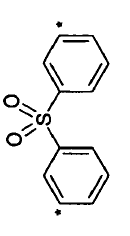 | 454 |
| 35 | dto. | 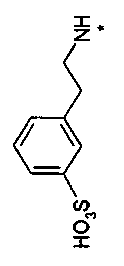 | dto. | dto. | 454 |
| 36 | dto. | dto. | dto. | 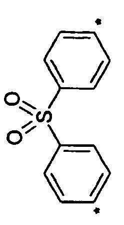 | 467 |
| 37 | dto. | dto. | 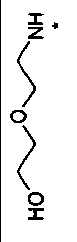 | dto. | 465 |
| 38 | dto. | dto. | dto. | 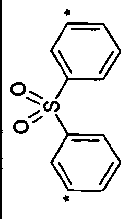 | 455 |
| 39 | dto. | 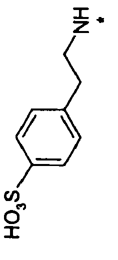 | dto. | dto. | 456 |
| 40 | dto. | 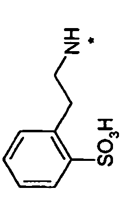 | dto. | 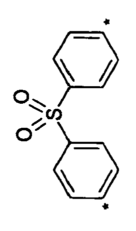 | 463 |

### USE EXAMPLE A

A dyebath at 40 °C, consisting of 2000 parts of water, 1 part of a weakly cation-active levelling agent which is based on an ethoxylated aminopropyl fatty acid amide and which has affinity for dye, 0.25 part of the dye of Preparation Example 1 and adjusted to pH 5 with 1 - 2 parts of 40 % acetic acid is entered with 100 parts of nylon-6 fabric. After 10 minutes at 40 °C, the dyebath is heated to 98 °C at a rate of 1 °C per minute and then left at the boil for 45 - 60 minutes. Thereafter it is cooled down to 70 °C over 15 minutes. The dyeing is removed from the bath, rinsed with hot and then with cold water and dried. The result obtained is a yellow polyamide dyeing possessing good light and wet fastnesses.

### USE EXAMPLE B

A dyebath at 40 °C, consisting of 2000 parts of water, 1 part of a weakly cation-active levelling agent which is based on an ethoxylated aminopropyl fatty acid amide and which has affinity for dye, 0.3 part of the dye of Preparation Example 1 and adjusted to pH 5.5 with 1 - 2 parts of 40 % acetic acid is entered with 100 parts of nylon-6,6 fabric. After 10 minutes at 40 °C, the dyebath is heated to 120 °C at a rate of 1.5 °C per minute and then left at this temperature for 15 - 25 minutes. Thereafter it is cooled down to 70 °C over 25 minutes. The dyeing is removed from the dyebath, rinsed with hot and then with cold water and dried. The result obtained is a yellow polyamide dyeing with good levelness and having good light and wet fastnesses.

### USE EXAMPLE C

A dyebath at 40 °C, consisting of 4000 parts of water, 1 part of a weakly amphoteric levelling agent which is based on a sulphated, ethoxylated fatty acid amide and which has affinity for dye, 0.4 part of the dye of Preparation Example 1 and adjusted to pH 5 with 1 - 2 parts of 40 % acetic acid is entered with 100 parts of wool fabric. After 10 minutes at 40 °C, the dyebath is heated to boiling at a rate of 1 °C per minute and then left at the boil for 40 - 60 minutes. Thereafter it is cooled down to 70 °C over 20 minutes. The dyeing is removed from the bath, rinsed with hot and then with cold water and dried. The result obtained is a yellow wool dyeing possessing good light and wet fastnesses.

### USE EXAMPLE D

| | | |
|---|---|---|
| 100 parts of a woven nylon-6 material are padded with a 50 °C liquor consisting of | | |
| 40 | parts | of the dye of Preparation Example 1, |
| 100 | parts | of urea, |
| 20 | parts | of a nonionic solubilizer based on butyldiglycol, |
| 15-20 | parts | of acetic acid (to adjust the pH to 4), |
| 10 | parts | of a weakly cation-active levelling agent which is based on an ethoxylated aminopropyl fatty acid amide and has affinity for dye, and |
| 810-815 | parts | of water (to make up to 1000 parts of padding liquor). |

The material thus impregnated is rolled up and left to dwell in a steaming chamber under saturated steam conditions at 85 - 98 °C for 3 - 6 hours for fixation. The dyeing is then rinsed with hot and cold water and dried. The result obtained is a yellow nylon dyeing having good levelness in the piece and good light and wet fastnesses.

### USE EXAMPLE E

A textile cut pile sheet material composed of nylon-6 and having a synthetic base fabric is padded with a liquor containing per 1000 parts

| | |
|---|---|
| 1 | part of dye of Preparation Example 1 |
| 4 | parts of a commercially available thickener based on carob flour ether |
| 2 | parts of a nonionic ethylene oxide adduct of a higher alkylphenol |
| 1 | part of 60 % acetic acid. |

This is followed by printing with a paste which per 1000 parts contains the following components:

| | |
|---|---|
| 20 | parts of commercially available alkoxylated fatty alkylamine (displace product) |
| 20 | parts of a commercially available thickener based on carob flour ether. |

The print is fixed for 6 minutes in saturated steam at 100 °C, rinsed and dried. The result obtained is a level-coloured cover material having a yellow and white pattern.

### USE EXAMPLE F

A dyebath at 40 °C consisting of 2000 parts of water, 1 part of a weakly cation-active levelling agent which is based on an ethoxylated aminopropyl fatty acid amide and has affinity for dye, 1.5 parts of the dye of Example 1, 0.2 parts of the red dyestuff of preparation example 8 of the patent application WO2002/46318: 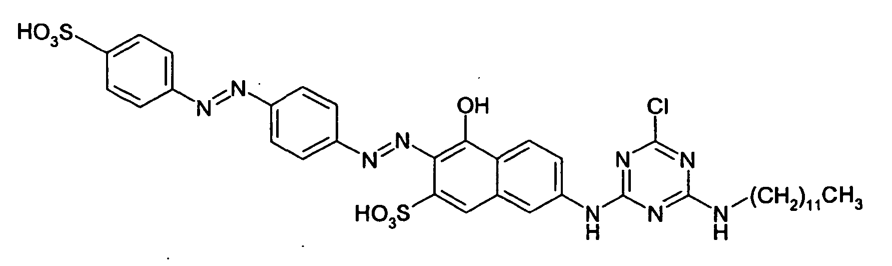 and 0.5 part of the blue dye of preparation example 46 of the patent application WO99/51681 and EP1066340 B1: 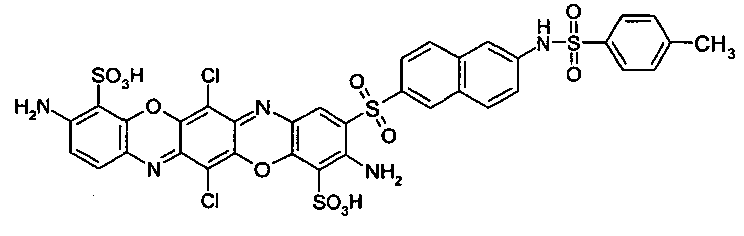 which is adjusted to pH 5 with 1 - 2 parts of 40 % acetic acid is entered with 100 parts of woven nylon-6,6 fabric. After 10 minutes at 40 °C, the dyebath is heated to 98 °C at a rate of 1 °C per minute and then left at the boil for 45 to 60 minutes. This is followed by cooling down to 70 °C over 15 minutes. The dyeing is removed from the bath, rinsed with hot and then with cold water and dried. The result obtained is a level grey polyamide dyeing having good light and wet fastnesses.

### USE EXAMPLE G

100 parts of a chrome-tanned and synthetically retanned shave-moist grain leather are dyed for 30 minutes in a bath of 300 parts of water and 2 parts of the dye of Preparation Example 1 at 55 °C. After addition of 4 parts of a 60 % emulsion of a sulphited fish oil, the leather is fatliquored for 45 minutes. It is then acidified with 8.5 % formic acid and milled for 10 minutes (final pH in the bath 3.5 - 4.0). The leather is then rinsed, allowed to drip dry and finished as usual. The result obtained is a leather dyed in a level clear orange hue with good fastnesses.

Use Examples A to G were also carried out with dyes 2 to 40 with similar results.

### USE EXAMPLE H

3 parts of the dye of Preparation Example 2 are dissolved in 82 parts of demineralized water and 15 parts of diethylene glycol at 60 °C. Cooling down to room temperature gives an orange printing ink which is very highly suitable for ink jet printing on paper or polyamide and wool textiles.

Use Example H were also carried out with dyes 1 and 3 to 40 with similar results.

### USE EXAMPLE I

A dyebath consisting of 1000 parts of water, 80 parts of calcined Glauber salt, 1 part of sodium nitrobenzene-3-sulphonate and 1 part of dye from Example 2 is heated to 80 °C in the course of 10 minutes. Then, 100 parts of mercerized cotton are added. This is followed by dyeing at 80 °C for 5 minutes and then heating to 95 °C in the course of 15 minutes. After 10 minutes at 95 °C, 3 parts of sodium carbonate are added, followed by a further 7 parts of sodium carbonate after 20 minutes and another 10 parts of sodium carbonate after 30 minutes at 95 °C. Dyeing is subsequently continued at 95 °C for 60 minutes. The dyed material is then removed from the dyebath and rinsed in running demineralized water for 3 minutes. This is followed by two washes for 10 minutes in 5000 parts of boiling demineralized water at a time and subsequent rinsing in running demineralized water at 60 °C for 3 minutes and with cold tap water for one minute. Drying leaves a brilliant yellow cotton dyeing having good fastnesses.

### USE EXAMPLE J

0.2 part of the dye of Preparation Example 2 is dissolved in 100 parts of hot water and the solution is cooled down to room temperature. This solution is added to 100 parts of chemically bleached sulphite pulp beaten in 2000 parts of water in a Hollander. After 15 minutes of commixing the stuff is sized with resin size and aluminium sulphate in a conventional manner. Paper produced from this stuff has a yellow shade with good wet fastnesses.

Use Examples I and J were also carried out with dyes 1 and 3 to 40 with similar results.

## Claims

1. Compounds of formula (I) 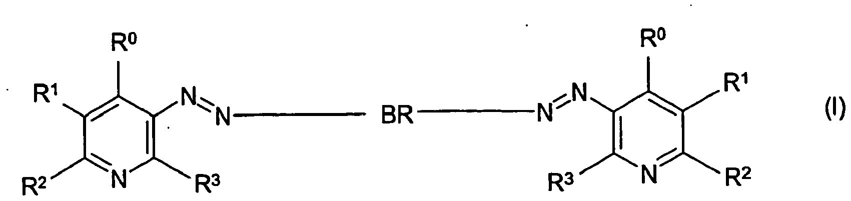 R⁰ signifies a C₁ to C₄ alkyl group,
R¹ signifies CN or CONH₂, R² and R³ are -NR⁴R⁵, wherein
NR⁴R⁵ together form a five- or six-membered heterocyclic ring, the heteroatoms being N, 0 and /or S
BR is a bridge of the formula -A-B-A- wherein
A is substituted phenyl or substituted naphthyl or unsubstituted phenyl or unsubstituted naphthyl, and
B is a bivalent group of the formula -SO₂-, -CONH-, -HNCO-, -SO₂NH- or -HNSO₂-,
with the proviso that the compounds of formula (I) bear at least one anionic substituent or wherein
R⁰ signifies methyl,
R¹ signifies CN or CONH₂,
R² or R³ signifies -NR⁴R⁵, wherein
R⁴ is hydrogen, and
R⁵ is C₁-C₄-alkylene-X, wherein X is phenyl or phenyl substituted with one sulfo group, and
R³ or R² signifies -NR⁴R⁵, wherein
R⁴ is hydrogen or methyl, and
R⁵ is C₁-C₄-alkylene-X, wherein X is hydroxyl, hydroxyl-C₁-C₄-alkoxy or wherein NR⁴R⁵together form a five- or six-membered heterocyclic ring, the heteroatoms being N, O and /or S, for example morpholinyl, piperidinyl and piperazinyl;
and
BR is a bridge of the formula -A-B-A- wherein
A is unsubstituted phenyl or phenyl substituted with a sulfo group, and
B is a bivalent group of the formula -SO₂-, -CONH-, -HNCO-, -SO₂NH- or -HNSO₂-,
with the proviso that the compounds of formula (I) bear one or two sulfo groups.

2. Compounds as claimed in claim 1, wherein the at least one anionic substituent is located in the substituents R² , R³ and/or A.

3. Compounds as claimed in claim 1 or 2, wherein 2 anionic substituents are present.

4. Compounds as claimed in any of claims 1 to 3, wherein the anionic substituents are sulfo groups.

5. Compounds as claimed in any of claims 1 to 4, wherein
R⁰ signifies methyl,
R¹ signifies CN or CONH₂,
R² and R³ signify -NR⁴R⁵, wherein
NR⁴R⁵ together form a five- or six-membered heterocyclic ring, the heteroatoms being N, O and /or S, for example morpholinyl, piperidinyl and piperazinyl;
and
BR is a bridge of the formula -A-B-A- wherein
A is unsubstituted phenyl or phenyl substituted with a sulfo group, and
B is a bivalent group of the formula -SO₂-, -CONH-, -HNCO-, -SO₂NH- or -HNSO₂-,
with the proviso that the compounds of formula (I) bear one or two sulfo groups.

6. Compounds as claimed in any of claims 1 to 5, wherein
R⁰ signifies methyl,
R¹ signifies CN,
R² or R³ signifies -NR⁴R⁵, wherein
R⁴ is hydrogen, and
R⁵ is C₂-C₃-alkylene-X, wherein X is sulfophenyl,
and
R³ or R² signifies -NR⁴R⁵, wherein
R⁴ is hydrogen, and
R⁵ is C₂-C₃-alkylene-X, wherein X is hydroxyl,
and
BR is a bridge of the formula -A-B-A- wherein
A is unsubstituted phenyl, and
B is a bivalent group of the formula -SO₂.

7. A process for preparing compounds of formula (I) as claimed in any of the preceding claims, wherein both amine functions of compounds of the formula (II)
H₂N - BR - NH₂ (II),
are diazotized and coupled onto totally two equivalents of compounds of the formula (III) and (IIIb)

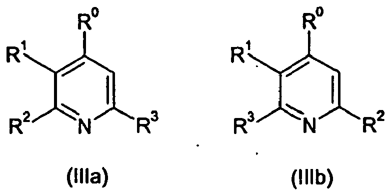

8. The use of the compounds of the formula (I) as claimed in claims 1 to 6, for dyeing and/or printing wool, silk and synthetic polyamides.

9. The use as claimed in claim 8, wherein the compounds of the formula (I) are used as yellow components in a trichromatic dyeing or printing process.

## Patentansprüche

1. Verbindungen der Formel (I) 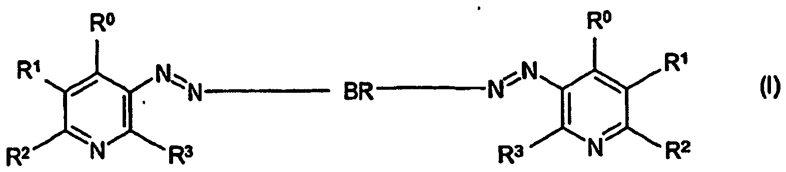 wobei
R⁰ eine C₁- bis C₄-Alkylgruppe bedeutet,
R¹ CN oder CONH₂ bedeutet,
R² und R³ -NR⁴R⁵ bedeuten, wobei NR⁴R⁵ zusammen einen fünf- oder sechsgliedrigen heterocyclischen Ring bilden, wobei es sich bei den Heteroatomen um N, O und/oder S handelt,
BR für eine Brücke der Formel -A-B-A- steht, wobei
A für substituiertes Phenyl oder substituiertes Naphthyl oder unsubstituiertes Phenyl oder unsubstituiertes Naphthyl steht und
B für eine zweiwertige Gruppe der Formel -SO₂-, -CONH-, - HNCO-, -SO₂NH- oder -HNSO₂- steht,
mit der Maßgabe, dass die Verbindungen der Formel (I) mindestens einen anionischen Substituenten tragen, oder wobei
R⁰ Methyl bedeutet,
R¹ CN oder CONH₂ bedeutet,
R² oder R³ -NR⁴R⁵ bedeutet, wobei
R⁴ für Wasserstoff steht und
R⁵ für C₁-C₄-Alkylen-X- steht, wobei X für Phenyl oder durch eine Sulfogruppe substituiertes Phenyl steht, und
R³ oder R²-NR⁴R⁵ bedeutet, wobei
R⁴ für Wasserstoff oder Methyl steht und
R⁵ für C₁-C₄-Alkylen-X- steht, wobei X für Hydroxyl oder Hydroxyl-C₁-C₄-alkoxy steht, oder wobei NR⁴R⁵ zusammen einen fünf- oder sechsgliedrigen heterocyclischen Ring bilden, wobei es sich bei den Heteroatomen um N, O und/oder S handelt, zum Beispiel Morpholinyl, Piperidinyl und Piperazinyl;
und
BR für eine Brücke der Formel -A-B-A- steht, wobei
A für unsubstituiertes Phenyl oder durch eine Sulfogruppe substituiertes Phenyl steht und
B für eine zweiwertige Gruppe der Formel -SO₂-, -CONH-, - HNCO-, -SO₂NH- oder -HNSO₂- steht,
mit der Maßgabe, dass die Verbindungen der Formel (I) eine oder zwei Sulfogruppen tragen.

2. Verbindungen nach Anspruch 1, wobei sich der mindestens eine anionische Substituent in den Substituenten R², R³ und/oder A befindet.

3. Verbindungen nach Anspruch 1 oder 2, wobei 2 anionische Substituenten vorliegen.

4. Verbindungen nach einem der Ansprüche 1 bis 3, wobei es sich bei den anionischen Substituenten um Sulfogruppen handelt.

5. Verbindungen nach einem der Ansprüche 1 bis 4, wobei
R⁰ Methyl bedeutet,
R¹ CN oder CONH₂ bedeutet,
R² und R³ -NR⁴R⁵ bedeuten, wobei NR⁴R⁵ zusammen einen fünf- oder sechsgliedrigen heterocyclischen Ring bilden, wobei es sich bei den Heteroatomen um N, O und/oder S handelt, zum Beispiel Morpholinyl, Piperidinyl und Piperazinyl;
und
BR für eine Brücke der Formel -A-B-A- steht, wobei
A für unsubstituiertes Phenyl oder durch eine Sulfogruppe substituiertes Phenyl steht und
B für eine zweiwertige Gruppe der Formel -SO₂-, -CONH-, - HNCO-, -SO₂NH- oder -HNSO₂- steht,
mit der Maßgabe, dass die Verrbindungen der Formel (I) eine oder zwei Sulfogruppen tragen.

6. Verbindungen nach einem der Ansprüche 1 bis 5, wobei
R⁰ Methyl bedeutet,
R¹ CN bedeutet,
R² oder R³ -NR⁴R⁵ bedeutet, wobei
R⁴ für Wasserstoff steht und
R⁵ für C₂-C₃-Alkylen-X- steht, wobei X für Sulfophenyl steht,
und
R³ oder R² -NR⁴R⁵ bedeutet, wobei
R⁴ für Wasserstoff steht und
R⁵ für C₂-C₃-Alkylen-X- steht, wobei X für Hydroxyl steht,
und
BR für eine Brücke der Formel -A-B-A- steht, wobei
A für unsubstituiertes Phenyl steht und
B für eine zweiwertige Gruppe der Formel -SO₂- steht.

7. Verfahren zur Herstellung von Verbindungen der Formel (I) nach einem der vorhergehenden Ansprüche, bei dem man beide Aminfunktionen von Verbindungen der Formel (II)
H₂N-BR-NH₂ (II)
diazotiert und auf insgesamt zwei Äquivalente von Verbindungen der Formel (IIIa) und (IIIb) 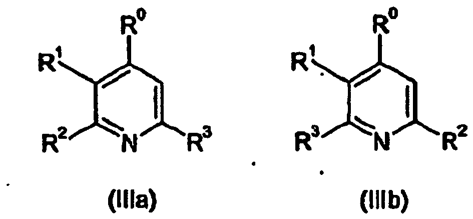 kuppelt.

8. Verwendung von Verbindungen der Formel (I) gemäß den Ansprüchen 1 bis 6 zum Färben und/oder Bedrucken von Wolle, Seide und synthetischen Polyamiden.

9. Verwendung nach Anspruch 8, bei der man die Verbindungen der Formel (I) als Gelbkomponenten in einem Trichromiefärbeverfahren oder Trichromiedruckverfahren verwendet.

## Revendications

1. Composés de formule (I) 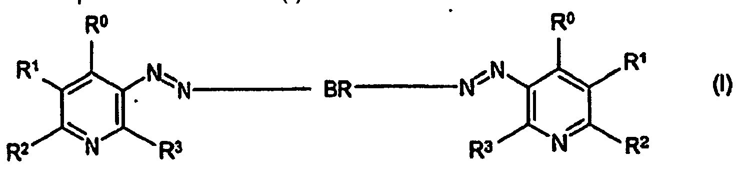 R⁰ signifie un groupe alkyle en C₁ à C₄,
R¹ signifie CN ou CONH₂,
R² et R³ sont -NR⁴R⁵, où
NR⁴R⁵ pris ensemble forment un noyau hétérocyclique à cinq ou six chaînons, les hétéroatomes étant N, O et/ou S,
BR est un pont de formule -A-B-A- dans laquelle
A est un phényle substitué ou un naphtyle substitué ou un phényle non substitué ou un naphtyle non substitué, et
B est un groupe bivalent de formule -SO₂-, -CONH-, -HNCO-, -SO₂NH- ou -HNSO₂-,
à la condition que les composés de formule (I) portent au moins un substituant anionique, ou dans laquelle
R⁰ signifie méthyle,
R¹ signifie CN ou CONH₂,
R² ou R³ signifie -NR⁴R⁵, où
R⁴ est un atome d'hydrogène, et
R⁵ est un groupe alkylène(en C₁-C₄)-X, où X est un phényle ou un phényle substitué par un groupe sulfo, et
R³ ou R² signifie -NR⁴R⁵, où
R⁴ est un atome d'hydrogène ou un méthyle, et
R⁵ est un groupe alkylène(en C₁-C₄)-X, où X est un hydroxyle, un hydroxyalcoxy en C₁-C₄ ou NR⁴R⁵ pris ensemble forment un noyau hétérocyclique à cinq ou six chaînons, les hétéroatomes étant N, O et/ou S, par exemple morpholinyle, pipéridinyle et pipérazinyle,
et
BR est un pont de formule -A-B-A- dans laquelle
A est un phényle non substitué ou un phényle substitué par un groupe sulfo, et
B est un groupe bivalent de formule -SO₂-, -CONH-, -HNCO-, -SO₂NH- ou -HNSO₂-,
à la condition que les composés de formule (I) portent un ou deux groupes sulfo.

2. Composés selon la revendication 1, dans lesquels le au moins un substituant anionique est situé dans les substituants R², R³ et/ou A.

3. Composés selon la revendication 1 ou 2, dans lesquels deux substituants anioniques sont présents.

4. Composés selon l'une quelconque des revendications 1 à 3, dans lesquels les substituants anioniques sont des groupes sulfo.

5. Composés selon l'une quelconque des revendications 1 à 4, dans lesquels
R⁰ signifie méthyle,
R¹ signifie CN ou CONH₂,
R² et R³ signifient -NR⁴R⁵, où
NR⁴R⁵ pris ensemble forment un noyau hétérocyclique à cinq ou six chaînons, les hétéroatomes étant N, O et/ou S, par exemple morpholinyle, pipéridinyle et pipérazinyle ;
et
BR est un pont de formule -A-B-A- dans laquelle
A est un phényle non substitué ou un phényle substitué par un groupe sulfo, et
B est un groupe bivalent de formule -SO₂-, -CONH-, -HNCO-, -SO₂NH- ou -HNSO₂-,
à la condition que les composés de formule (I) portent un ou deux groupes sulfo.

6. Composés selon l'une quelconque des revendications 1 à 5, dans lesquels
R⁰ signifie méthyle,
R¹ signifie CN,
R² ou R³ signifie -NR⁴R⁵, où
R⁴ est un atome d'hydrogène, et
R⁵ est un groupe alkylène(en C₂-C₃)-X, où X est un sulfophényle, et
R³ ou R² signifie -NR⁴R⁵, où
R⁴ est un atome d'hydrogène, et
R⁵ est un groupe alkylène(en C₂-C₃)-X, où X est un hydroxyle, et
BR est un pont de formule -A-B-A- dans laquelle
A est un phényle non substitué, et
B est un groupe bivalent de formule -SO₂-.

7. Procédé pour la préparation de composés de formule (I) selon l'une quelconque des revendications précédentes, dans lequel les deux fonctions amine des composés de formule (II)
H₂N - BR - NH₂ (II),
sont diazotées et couplées sur deux équivalents au total de composés de formule (IIIa) et (IIIb)

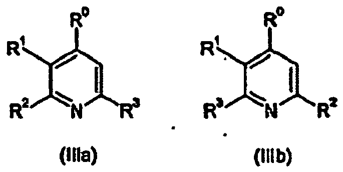

8. Utilisation des composés de formule (I) selon les revendications 1 à 6, pour la teinture et/ou l'impression de la laine, de la soie et des polyamides synthétiques.

9. Utilisation selon la revendication 8, dans laquelle les composés de formule (I) sont utilisés en tant que composants jaunes dans un procédé de teinture ou d'impression trichromatique.
